# FASCICULE DE BREVET EUROPEEN

(11) **EP 1 438 499 B1**
(45) Date de publication et mention de la délivrance du brevet: **19.09.2007**
(21) Numéro de dépôt: 02790533.0
(22) Date de dépôt: 22.10.2002
(51) Int. Cl.: F02M 31/20, F02M 37/00, F02M 63/02

(54) **SYSTEME D'INJECTION DE CARBURANT POUR MOTEUR DIESEL AVEC RECYCLAGE**
BRENNSTOFFEINSPRITZSYSTEM MIT RÜCKFÜHRUNG FÜR DIESELMOTOREN
FUEL INJECTION SYSTEM FOR A DIESEL ENGINE WITH RECYCLING

(30) Priorité: 22.10.2001 FR 0113616
(43) Date de publication de la demande: 21.07.2004
(73) Titulaire: Peugeot Citroen Automobiles SA, 92200 Neuilly sur Seine (FR)
(72) Inventeur: PIET, Patrick, F-92800 Puteaux (FR)
(74) Mandataire: Thinat, Michel
(86) Numéro de dépôt international: PCT/FR2002/003612
(87) Numéro de publication internationale: WO 2003/036074

(56) Documents cités:
- DE-A- 19 631 981
- DE-A- 19 941 689
- DE-C- 19 543 538
- FR-A- 2 773 591
- US-A- 4 187 813
- US-A- 5 865 158
- US-B1- 6 234 151

## Description

La présente invention concerne généralement les systèmes d'injection de carburant pour moteur diesel.

Plus précisément, l'invention concerne un système d'injection de carburant pour un moteur diesel refroidi par un circuit d'eau de refroidissement, ce système comprenant un réservoir de stockage, un circuit de distribution, une rampe d'injection et un circuit de collecte, le circuit de distribution comprenant une pompe assurant le transfert sous pression d'un flux de carburant frais du réservoir de stockage vers l'injecteur et un dispositif de réchauffage sélectif du flux de carburant frais avant admission dans la pompe, la rampe d'injection injectant dans le moteur une première partie de ce carburant dont une seconde partie forme un flux de carburant non injecté, le circuit de collecte comprenant un dispositif de refroidissement du flux de carburant non injecté et assurant le retour sélectif de ce flux vers le réservoir de stockage.

Des systèmes de ce type sont déjà connus de l'art antérieur, en particulier par la demande de brevet européen EP 0 304 742 qui décrit un circuit d'injection où une partie du flux de carburant refoulé par la pompe est prélevée avant d'entrer dans la rampe d'injection, détendue par une vanne régulatrice de pression et partiellement recyclée en amont de la pompe. La détente provoque un échauffement du carburant, utilisé pour préchauffer le carburant frais venant du réservoir de stockage, celui-ci étant mélangé au flux recyclé avant d'alimenter la pompe. La vanne régulatrice est pilotée par un système de contrôle automatique, qui commande également une vanne tout ou rien permettant d'interrompre le recyclage du carburant vers l'amont de la pompe. Quand la température du carburant alimentant la pompe descend en dessous d'un seuil bas, la vanne de recyclage est ouverte par le système de contrôle, et quand cette température dépasse un seuil haut, la vanne de recyclage est fermée.

Le système d'injection décrit par la demande européenne EP 0 304 742 comprend également des moyens de refroidissement du carburant non injecté dans le moteur constitués d'un ventilateur soufflant de l'air sur une section de tuyauterie en spirale et sur un échangeur de chaleur, le carburant circulant soit dans la tuyauterie, soit dans l'échangeur, soit dans les deux à la fois.

Ce système présente des défauts. Tout d'abord, le prélèvement d'une partie du carburant entre la pompe et la rampe d'injection diminue la quantité de carburant alimentant le moteur et force donc à surdimensionner la pompe, surtout si le système d'injection est prévu pour fonctionner dans des zones où les conditions climatiques sont très sévères.

D'autre part, la capacité de refroidissement des moyens cités ci-dessus est limitée par les propriétés thermiques de l'air, sensiblement moins bonnes qu'un liquide de refroidissement aqueux.

L'application de l'invention à des systèmes comprenant des pompes d'injection haute pression est donc difficile, en particulier parce que l'échauffement du carburant non injecté dans le moteur est très fort.

Dans ce contexte, la présente invention a pour but de palier les difficultés mentionnées ci-dessus.

A cette fin, le système selon l'invention comprend l'ensemble des caractéristiques techniques telles qu'énoncées dans la revendication 1.

Avantageusement, le dispositif de refroidissement peut comprendre un premier équipement de refroidissement refroidissant sélectivement le flux de carburant non injecté et un second équipement de refroidissement refroidissant sélectivement le flux de carburant non injecté et le courant dérivé de refroidissement/lubrification de la pompe.

De préférence, le premier équipement de refroidissement peut être un échangeur de chaleur entre d'une part le flux de carburant non injecté et d'autre part le circuit d'eau de refroidissement du moteur.

Par exemple, le circuit de collecte peut comprendre un dispositif de bypass sélectif du premier équipement de refroidissement.

Avantageusement, le second équipement de refroidissement peut être un échangeur air/carburant.

De préférence, le flux de carburant non injecté et le courant dérivé mélangés sont orientés vers le réservoir de stockage à travers le second équipement de refroidissement dans la seconde position de l'organe d'orientation.

Par exemple, au moins le dispositif de bypass et l'organe d'orientation peuvent être pilotés par un dispositif de commande au moins en fonction de la température extérieure, du régime du moteur, de la pression de la rampe d'injection et de mesures de température en un ou plusieurs points du circuit de distribution, du circuit de collecte et du circuit d'eau de refroidissement du moteur.

Avantageusement, le dispositif de bypass peut comprendre une vanne trois voies en amont du premier équipement de refroidissement et une ligne joignant cette vanne trois voies à un point du circuit de collecte situé en aval du premier équipement de refroidissement.

De préférence, l'organe d'orientation peut être une vanne trois voies.

D'autres caractéristiques et propriétés avantageuses de l'invention ressortiront de la description qui en est donné ci-dessous, à titre indicatif et nullement limitatif, en référence aux dessins annexés, dans lesquels :
- la figure 1 est un schéma général de l'architecture du système d'injection selon l'invention,
- la figure 2 montre le système de la figure 1 dans des conditions de fonctionnement correspondant à une température extérieure froide et un régime moteur moyen,
- la figure 3 montre le système de la figure 1 dans des conditions de fonctionnement correspondant à une température extérieure très chaude et un régime moteur élevé, et
- la figure 4 montre le système de la figure 1 dans des conditions de fonctionnement correspondant à une température extérieure chaude et un régime moteur faible.

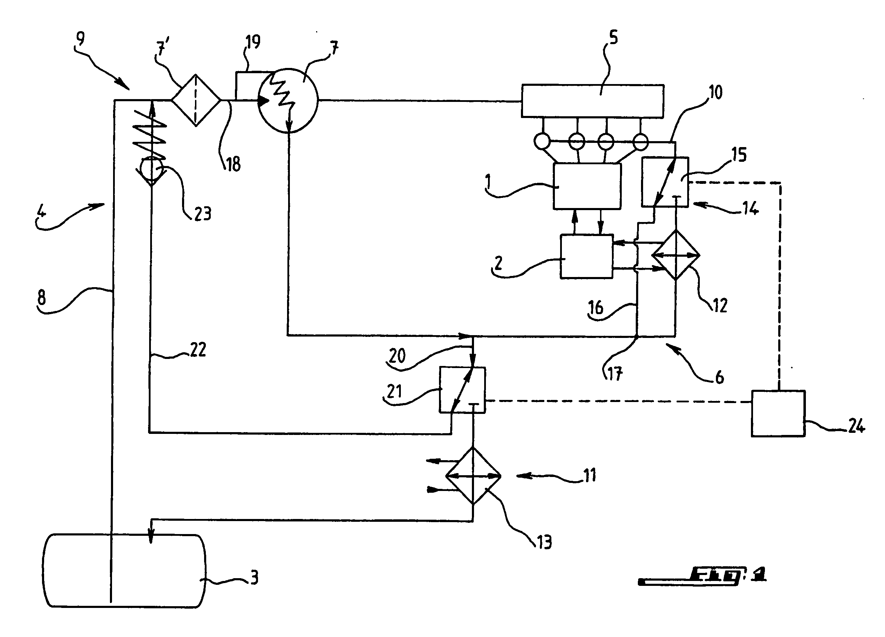

Comme le montre la figure 1, l'invention concerne un système d'injection de carburant, typiquement du gasoil, pour un moteur diesel 1 refroidi par un circuit d'eau de refroidissement 2 de manière connue en soi. Le système d'injection comprend un réservoir de stockage de carburant 3, un circuit de distribution du carburant 4, une rampe d'injection 5 et un circuit de collecte 6 et de retour d'une partie du carburant vers le réservoir 3.

Le circuit de distribution comprend une pompe 7, ou un autre moyen de transfert, assurant le transfert sous pression d'un flux de carburant frais 8 du réservoir de stockage 3 vers l'injecteur 5 et un système de réchauffage sélectif 9 du flux de carburant frais 8 avant admission dans la pompe 7. Le carburant passe par un filtre 7' avant d'être admis à l'aspiration de la pompe 7.

La rampe d'injection 5 injecte une partie seulement de ce carburant dans le moteur 1. Le reste du carburant constitue un flux de carburant non injecté 10 et subit une détente accompagnée d'un échauffement sensiblement proportionnel à la pression de refoulement de la pompe 7.

Ce flux de carburant non injecté 10 est collecté par le circuit de collecte 6 qui comprend un dispositif de refroidissement 11 et assure le recyclage sélectif du flux 10 vers le réservoir de stockage 3.

Selon l'invention, le dispositif de refroidissement 11 comprend un premier équipement de refroidissement 12 disposé juste en aval de la rampe d'injection 5 selon le sens de circulation du carburant et un second équipement de refroidissement 13.

Ce premier équipement de refroidissement 12 peut être bypassé par un dispositif de bypass 14 comprenant une vanne trois voies 15 en amont du premier équipement de refroidissement 12 et une ligne 16 joignant cette vanne trois voies 15 à un point 17 du circuit de collecte 6 situé en aval du premier équipement de refroidissement 12.

La vanne trois voies 15 adopte sélectivement une première et une seconde position, le flux de carburant non injecté 10 sortant de la rampe d'injection 5 étant dirigé vers le premier équipement de refroidissement 12 dans la première position, et vers la ligne de bypass 16 dans la seconde position.

Le même résultat est obtenu avec un ensemble de deux vannes tout ou rien, l'une disposée sur la ligne de bypass 16, l'autre disposée sur la ligne alimentant le premier équipement de refroidissement 12.

La pompe 7, alimentée en carburant par un flux amont 18, est refroidie et/ou lubrifiée par un courant dérivé 19 du flux amont 18. Ce courant dérivé 19 se mélange ensuite au flux de carburant non injecté 10 en aval du point 17 du circuit de collecte 6 pour former un flux recyclé 20.

Le flux recyclé 20 passe ensuite dans un organe d'orientation 21 qui adopte sélectivement une première et une seconde position, le flux recyclé 20 étant dirigé vers l'amont de la pompe 7 par une ligne de recyclage 22 dans la première position, et vers le second équipement de refroidissement 13 dans la seconde position.

L'organe d'orientation 21 est typiquement constitué d'une vanne trois voies. D'autres solutions sont possibles comme un ensemble de deux vannes tout ou rien, l'une disposée sur la ligne de recyclage vers la pompe 7, l'autre disposée sur la ligne alimentant le second équipement de refroidissement 13.

La ligne de recyclage 22 vers la pompe 7 comprend un clapet anti-retour 23. Quand le flux recyclé 20 est orienté vers l'amont de la pompe 7, il se mélange avec le flux de carburant frais 8 venant du réservoir de stockage 3 pour former le flux amont 18 alimentant la pompe 7.

Dans une variante de réalisation, la ligne de recyclage 22 peut ne pas comprendre le clapet anti-retour 23.

Le mélange du flux de carburant frais 8 avec le flux recyclé 20 constitué de carburant détendu et donc chaud, permet d'élever la température du flux de carburant frais 8. Le dispositif de réchauffage sélectif 9 est donc principalement constitué de la vanne trois voies 21 et de la ligne de recyclage 22.

Dans la seconde position de la vanne trois voies 21, le flux recyclé 20 est orienté vers le second équipement de refroidissement 13 qu'il traverse, puis revient au réservoir de stockage 3.

Le premier équipement de refroidissement 12 est un échangeur de chaleur entre d'une part le flux de carburant non injecté 10 et d'autre part le circuit d'eau de refroidissement 2 du moteur 1. Il est typiquement implanté sous le capot du véhicule.

Le second équipement de refroidissement 13 est un échangeur de chaleur air/carburant. Le flux d'air peut être créé par un ventilateur et/ou par le déplacement du véhicule, l'échangeur 13 étant alors disposé face à une prise d'air ou à un endroit ouvert sur l'extérieur comme par exemple sous la caisse du véhicule.

Le système d'injection est piloté par un dispositif de commande 24 en fonction au moins de la température extérieure, du régime du moteur 1, de la pression de la rampe d'injection 5 et de mesures de température en un ou plusieurs points du circuit de distribution 4 et/ou du circuit de collecte 6 et/ou du circuit de refroidissement 2 du moteur 1.

Le système de commande 24 sélectionne les positions des vannes trois voies 15 et 21 de façon à maintenir la température du carburant admis dans la pompe 7 à une température minimum et à limiter la température du flux de carburant non injecté 10.

La première contrainte vient essentiellement du fait que la viscosité du carburant augmente rapidement à basse température (moins 20 à moins 40°C), ce qui peut conduire à d'importantes difficultés pour maintenir le débit d'alimentation de carburant adéquat, allant jusqu'à l'arrêt du moteur 1.

La seconde contrainte vient de l'échauffement du carburant après détente, qui peut être très important dans le cas de moteurs 1 munis de pompes 7 haute pression, de moteurs de forte cylindrée ou de moteurs dont les flux de carburant non injecté 10 sont élevés. On peut dans ce cas rencontrer des problèmes de tenue en température des matériaux employés dans le circuit de collecte 6 ou dans la rampe d'injection 5.

Dans une variante de réalisation, les positions des vannes trois voies 15 et 21 sont pilotées uniquement par des mesures de température du carburant dans les circuits de distribution 4 et de collecte 6.

On décrira ci-dessous les conditions de fonctionnement du système d'injection selon l'invention pour différents cas de figure.

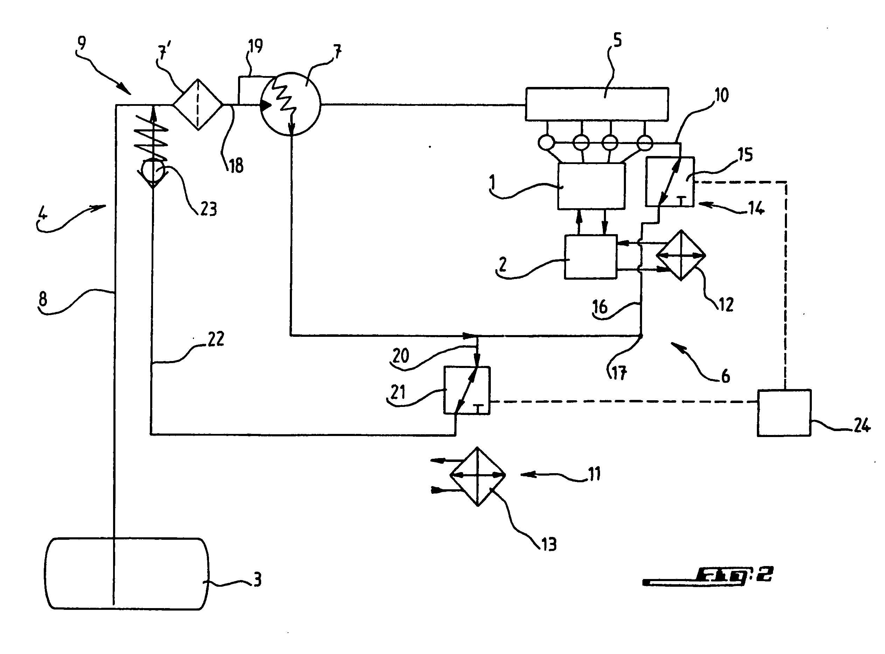

Le premier cas envisagé, illustré sur la figure 2, correspond à une température extérieure basse, de l'ordre de moins 20°C, et à un régime moteur moyen. On cherche bien entendu dans cette configuration à réchauffer le carburant alimentant la pompe 7. Cet objectif est atteint en positionnant la vanne trois voies 15 de façon à ce que le flux de carburant non injecté 10 bypasse l'échangeur 12 et en positionnant la vanne trois voies 21 de façon à recycler le flux recyclé 20 en amont de la pompe 7. Le flux de carburant non injecté 10 et le courant dérivé 19, constituant le flux recyclé 20, sont intégralement recyclés et apportent leurs calories pour réchauffer le flux de carburant frais 8 très froid venant du réservoir de stockage 3, qui se trouve à température ambiante. Dans un cas de fonctionnement typique, on peut calculer que les puissances calorifiques apportées respectivement par le flux de carburant non injecté 10 et le courant dérivé 19 sont respectivement de 800 W et de 200 W, ce qui permet donc de disposer d'une puissance de 1000 W pour réchauffer le carburant froid venant du réservoir de stockage 3.

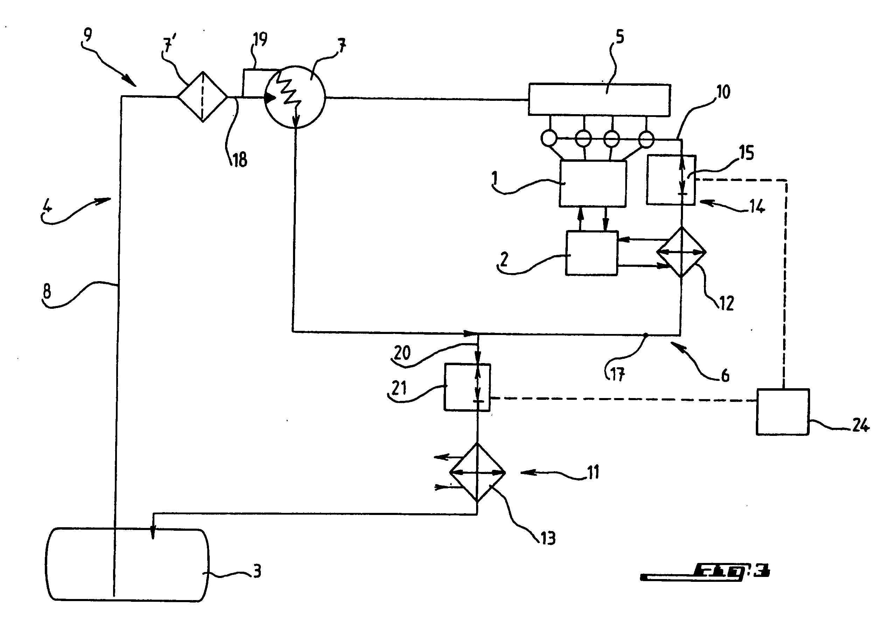

Le deuxième cas envisagé, illustré sur la figure 3, correspond à une température extérieure très élevée de l'ordre de 80°C, ce qui peut être obtenu dans certain cas après une exposition prolongée en plein soleil, et à un régime moteur élevé. On cherche dans cette configuration à refroidir au maximum et le flux de carburant non injecté 10, et le courant dérivé 19. Le réchauffage du carburant alimentant la pompe 7 n'est pas nécessaire. Cet objectif est atteint en positionnant la vanne trois voies 15 de façon à ce que le flux de carburant non injecté 10 soit refroidi par l'échangeur 12 et en positionnant la vanne trois voies 21 de façon à ce que le flux recyclé 20 soit refroidi par l'échangeur 13 avant d'être recyclé dans le réservoir de stockage 3. Dans un cas de fonctionnement typique, on peut calculer que les puissances calorifiques apportées respectivement par le flux de carburant non injecté 10 et le courant dérivé 19 sont respectivement de 2200 W et de 375 W. Le premier échangeur 12 permet d'évacuer 800W dans le circuit de refroidissement 2 du moteur 1. Le second échangeur 13 permet de dissiper 1100 W.

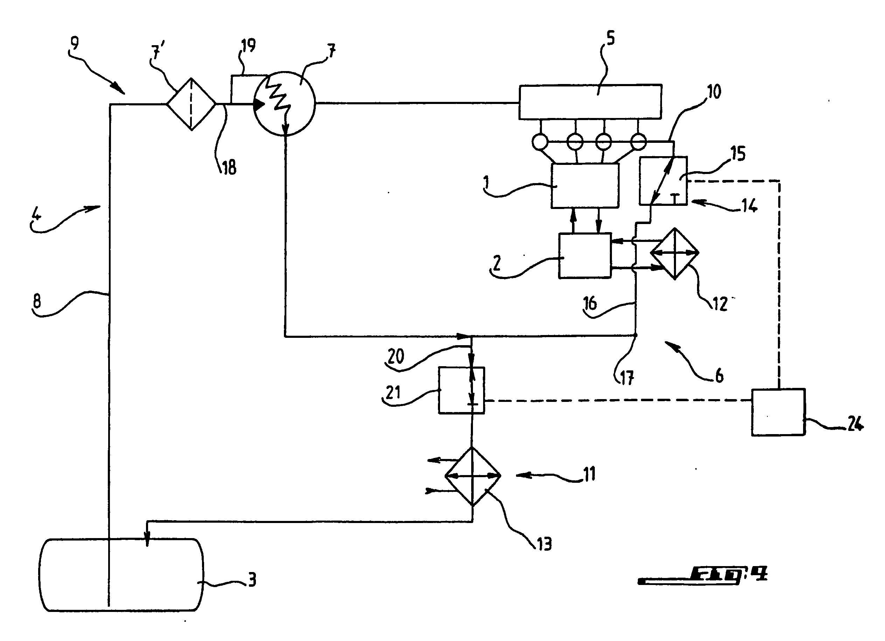

Le troisième cas envisagé, illustré sur la figure 4, correspond à une température extérieure chaude de l'ordre de 40°C, et à un régime moteur faible. Dans cette configuration on n'a pas besoin de réchauffer le flux de carburant frais 8 venant du réservoir de stockage 3, et le besoin de refroidissement du flux de carburant non injecté 10 et du courant dérivé 19 est modéré. La vanne trois voies 15 est positionnée de façon à ce que le flux de carburant non injecté 10 bypasse l'échangeur 12 et la vanne trois voies 21 est positionnée de façon à ce que le flux recyclé 20 soit refroidi par l'échangeur 13 avant d'être recyclé dans le réservoir de stockage 3. Il est à noter que dans ce cas la température de l'eau du circuit de refroidissement 2 du moteur 1 peut être plus élevée que celle du flux de carburant non injecté 10, ce qui rend l'utilisation de l'échangeur 12 inutile. Dans un cas de fonctionnement typique, on peut calculer que les puissances calorifiques apportées respectivement par le flux de carburant non injecté 10 et le courant dérivé 19 sont respectivement de 600 W et de 200 W. Le second échangeur 13 permet de dissiper 300 W.

Dans une variante de réalisation non représentée sur les figures 1 à 4, la vanne trois voies 15 est remplacée par une ou des vannes de réglage permettant de faire passer seulement une partie du flux de carburant non injecté 10 à travers l'échangeur 12 pour réguler plus finement le refroidissement du carburant recyclé. De même, la vanne trois voies 21 est remplacée par une ou des vannes de réglage permettant de recycler seulement une partie du flux recyclé 20 en amont de la pompe 7 et d'envoyer une autre partie vers l'échangeur 13 pour réguler plus finement le réchauffage du carburant alimentant la pompe 7. Cette ou ces vannes de réglage sont pilotées par un calculateur.

Dans une autre variante de réalisation, d'autres échangeurs de chaleur sont placés dans le circuit de collecte 6 pour chauffer, par exemple, l'habitacle du véhicule.

## Revendications

1. Système d'injection de carburant pour un moteur diesel (1) refroidi par un circuit d'eau de refroidissement (2), ce système comprenant un réservoir de stockage (3), un circuit de distribution (4), une rampe d'injection (5) et un circuit de collecte (6), le circuit de distribution (4) comprenant une pompe (7) assurant le transfert sous pression d'un flux de carburant frais (8) du réservoir de stockage (3) vers la rampe d'injection (5) et un dispositif de réchauffage sélectif (9) du flux de carburant frais (8) avant admission dans la pompe (7), la rampe d'injection (5) injectant dans le moteur (1) une première partie de ce carburant dont une seconde partie forme un flux de carburant non injecté (10), le circuit de collecte (6) comprenant un dispositif de refroidissement (11) du flux de carburant non injecté (10) et assurant le retour sélectif de ce flux (10) vers le réservoir de stockage (3), le dispositif de chauffage sélectif (9) comprenant une ligne de recyclage (22) et un organe d'orientation (21) permettant de recycler sélectivement le flux de carburant non injecté (10) en amont de la pompe (7), ce flux (10) étant mélangé avec le flux de carburant frais (8) venant directement du réservoir (3), la pompe (7), alimentée en carburant par un flux amont (18), étant refroidie et/ou lubrifiée par un courant dérivé (19) du flux amont (18), ce courant dérivé (19) étant mélangé avec le flux de carburant non injecté (10), l'organe d'orientation (21) adoptant sélectivement une première et une seconde position, le flux de carburant non injecté (10) et le courant dérivé (19) mélangés étant orientés vers l'amont de la pompe (7) dans la première position, et vers le réservoir de stockage (3) dans la seconde position.

2. Système d'injection de carburant selon la revendication 1, **caractérisé en ce que** le dispositif de refroidissement (11) comprend un premier équipement de refroidissement (12) refroidissant sélectivement le flux de carburant non injecté (10) et un second équipement de refroidissement (13) refroidissant sélectivement le flux de carburant non injecté (10) et le courant dérivé (19) de refroidissement/lubrification de la pompe (7).

3. Système d'injection de carburant selon la revendication 2, **caractérisé en ce que** le premier équipement de refroidissement (12) est un échangeur de chaleur entre d'une part le flux de carburant non injecté (10) et d'autre part le circuit d'eau de refroidissement (2) du moteur (1).

4. Système d'injection de carburant selon la revendication 2 ou 3, **caractérisé en ce que** le circuit de collecte (6) comprend un dispositif de bypass sélectif (14) du premier équipement de refroidissement (12).

5. Système d'injection de carburant selon l'une quelconque des revendications 2 à 4, **caractérisé en ce que** le second équipement de refroidissement (13) est un échangeur air/carburant.

6. Système d'injection de carburant selon l'une quelconque des revendications 2 à 5, **caractérisé en ce que** le flux de carburant non injecté (10) et le courant dérivé (19) mélangés sont orientés vers le réservoir de stockage (3) à travers le second équipement de refroidissement (13) dans la seconde position de l'organe d'orientation (21).

7. Système d'injection de carburant selon l'une quelconque des revendications précédentes combinée avec la revendication 4, **caractérisé en ce que** le dispositif de bypass (14) comprend une vanne trois voies (15) en amont du premier équipement de refroidissement (12) et une ligne (16) joignant cette vanne trois voies (15) à un point (17) du circuit de collecte (6) situé en aval du premier équipement de refroidissement (12).

8. Système d'injection de carburant selon l'une quelconque des revendications précédentes **caractérisé en ce que** l'organe d'orientation (21) est une vanne trois voies.

9. Système d'injection de carburant selon l'une quelconque des revendications précédentes en combinaison avec la revendication 4, **caractérisé en ce qu'**au moins le dispositif de bypass (14) et l'organe d'orientation (21) sont pilotés par un dispositif de commande (24) au moins en fonction de la température extérieure, du régime du moteur (1), de la pression de la rampe d'injection (5) et de mesures de température en un ou plusieurs points du circuit de distribution (4), du circuit de collecte (6) et du circuit d'eau de refroidissement (2) du moteur (1).

## Claims

1. A fuel-injection system for a diesel engine (1) cooled by a coolant water circuit (2), this system comprising a storage tank (3), a distribution circuit (4), an injection ramp (5) and a collection circuit (6), the distribution circuit (4) comprising a pump (7) providing pressurized transfer of a flow of fresh fuel (8) from the storage tank (3) towards the injection ramps (5) and a selective device (9) for reheating the flow of fresh fuel (8) before admission into the pump (7), the injection ramp (5) injecting into the engine (1) a first portion of this fuel, a second portion of which forms a flow of non-injected fuel (10), the collection circuit (6) comprising a device (11) for cooling the non-injected fuel (10) and providing selective return of this flow (10) towards the storage tank (3), the selective heating device (9) comprising a recycling line (22) and an orienting component (21) providing selective recycling of the flow of non-injected fuel (10) upstream from the pump (7), this flow (10) being mixed with the fresh fuel flow (8) directly from the tank (3), the pump (7) being supplied with fuel by an upstream flow (18) cooled and/or lubricated by a current (19) derived from the upstream flow (18), this derived current (19) being mixed with the non-injected fuel flow (10), the orienting component (21) selectively adopting a first and a second position, the mixed non-injected fuel flow (10) and the derived current (19) being directed towards the pump (7) upstream in the first position, and towards the storage tank (3) in the second position.

2. The fuel injection system according to claim 1, **characterized in that** the cooling device (11) comprises a first cooling equipment unit (12) selectively cooling the non-injected fuel flow (10) and a second cooling equipment unit (13) selectively cooling the non-injected fuel flow (10) and the derived current (19) for cooling/lubricating the pump (7).

3. The fuel injection system according to claim 2, **characterized in that** the first cooling equipment unit (12) is a heat exchanger between the non-injected fuel flow (10) on the one hand and the coolant water circuit (2) of the engine (1) on the other hand.

4. The fuel injection system according to claim 2 or 3, **characterized in that** the collection circuit (6) comprises a selective bypass device (14) of the first cooling equipment unit (12).

5. The fuel injection system according to any of claims 2 to 4, **characterized in that** the second cooling equipment unit (13) is an air/fuel exchanger.

6. The fuel injection system according to any of claims 2 to 5, **characterized in that** the mixed non-injected fuel flow (10) and the derived current (19) are directed towards the storage tank (3) through the second cooling equipment unit (13) in the second position of the orienting component (21).

7. The fuel injection system according to any of the preceding claims combined with claim 4, **characterized in that** the bypass device (14) comprises a three-way valve (15) upstream from the first cooling equipment unit (12) and a line (16) joining this three-way valve (15) to a point (17) of the collection circuit (6) located downstream from the first cooling equipment unit (12).

8. The fuel injection system according to any of the preceding claims, **characterized in that** the orienting component (21) is a three-way valve.

9. The fuel injection system according to any of the preceding claims in combination with claim 4, **characterized in that** at least the bypass device (14) and the orienting component (21) are controlled by a control device (24) at least depending on the outdoor temperature, on the operating conditions of the engine (1), on the pressure of the injection ramp (5) and on temperature measurements at one or several points of the distribution circuit (4), the collection circuit (6) and the coolant water circuit (2) of the engine (1).

## Patentansprüche

1. Kraftstoffeinspritzsystem für einen durch einen Kühlwasserkreislauf (2) gekühlten Dieselmotor (1), wobei dieses System einen Vorratsbehälter (3), einen Verteilerkreislauf (4), eine Einspritzrampe (5) und einen Sammelkreislauf (6) umfasst, wobei der Verteilerkreislauf (4) eine Pumpe (7), die die Weiterleitung unter Druck eines Stroms frischen Kraftstoffs (8) aus dem Vorratsbehälter (3) in Richtung der Einspritzrampe (5) gewährleistet, und eine Vorrichtung zur selektiven Erwärmung (9) des Stroms frischen Kraftstoffs (8) vor Eintritt in die Pumpe (7) umfasst, wobei die Einspritzrampe (5) einen ersten Teil dieses Kraftstoffs, dessen zweiter Teil einen Strom nicht eingespritzten Kraftstoffs (10) bildet, in den Motor (1) einspritzt, wobei der Sammelkreislauf (6) eine Kühlvorrichtung (11) des Stroms nicht eingespritzten Kraftstoffs (10) umfasst und die selektive Rückführung dieses Stroms (10) zum Vorratsbehälter (3) gewährleistet, wobei die Vorrichtung zur selektiven Erwärmung (9) eine Rückführungsleitung (22) und ein Orientierungsorgan (21) umfasst, die es erlauben, den Strom nicht eingespritzten Kraftstoffs (10) vor der Pumpe (7) selektiv zurückzuführen, wobei dieser Strom (10) mit dem Strom frischen Kraftstoffs (8), der direkt vom Behälter (3) kommt, gemischt ist, wobei die Pumpe (7), die von einem stromaufwärtigen Strom (18) mit Kraftstoff versorgt wird, von einer abgeleiteten Strömung (19) des stromaufwärtigen Stroms (18) gekühlt und/oder geschmiert wird, wobei diese abgeleitete Strömung (19) mit dem Strom nicht eingespritzten Kraftstoffs (10) gemischt ist, wobei das Orientierungsorgan (21) selektiv eine erste und eine zweite Stellung einnimmt, wobei der gemischte Strom nicht eingespritzten Kraftstoffs (10) und die abgeleitete Strömung (19) in der ersten Stellung stromaufwärtig zur Pumpe (7) ausgerichtet sind und in Richtung des Vorratsbehälters (3) in der zweiten Stellung.

2. Kraftstoffeinspritzsystem nach Anspruch 1, **dadurch gekennzeichnet, dass** die Kühlvorrichtung (11) eine erste Kühleinrichtung (12) umfasst, die selektiv den Strom nicht eingespritzten Kraftstoffs (10) kühlt, und eine zweite Kühleinrichtung (13), die selektiv den Strom nicht eingespritzten Kraftstoffs (10) und die abgeleitete Kühl/Schmierströmung (19) der Pumpe (7) kühlt.

3. Kraftstoffeinspritzsystem nach Anspruch 2, **dadurch gekennzeichnet, dass** die erste Kühleinrichtung (12) ein Wärmetauscher zwischen einerseits dem Strom nicht eingespritzten Kraftstoffs (10) und andererseits dem Kühlwasserkreislauf (2) des Motors (1) ist.

4. Kraftstoffeinspritzsystem nach Anspruch 2 oder 3, **dadurch gekennzeichnet, dass** der Sammelkreislauf (6) eine selektive Bypassvorrichtung (14) der ersten Kühleinrichtung (12) umfasst.

5. Kraftstoffeinspritzsystem nach einem der Ansprüche 2 bis 4, **dadurch gekennzeichnet, dass** die zweite Kühleinrichtung (13) ein Austauscher Luft/Kraftstoff ist.

6. Kraftstoffeinspritzsystem nach einem der Ansprüche 2 bis 5, **dadurch gekennzeichnet, dass** der gemischte Strom nicht eingespritzte Kraftstoffs (10) und die abgeleitete Strömung über die zweite Kühleinrichtung (13) in der zweiten Stellung des Orientierungsorgans (21) zum Vorratsbehälter (3) gelenkt werden.

7. Kraftstoffeinspritzsystem nach einem der vorangehenden Ansprüche in Kombination mit Anspruch 4, **dadurch gekennzeichnet, dass** die Bypassvorrichtung (14) ein Dreiwegeventil (15) vor der ersten Kühleinrichtung (12) umfasst und eine Leitung, die dieses Dreiwegeventil (15) mit einem Punkt (17) des Sammelkreislaufs (6) nach der ersten Kühleinrichtung (12) verbindet.

8. Kraftstoffeinspritzsystem nach einem der vorangehenden Ansprüche, **dadurch gekennzeichnet, dass** das Orientierungsorgan (21) ein Dreiwegeventil ist.

9. Kraftstoffeinspritzsystem nach einem der vorangehenden Ansprüche in Kombination mit Anspruch 4, **dadurch gekennzeichnet, dass** mindestens die Bypassvorrichtung (14) und das Orientierungsorgan (21) von einer Steuervorrichtung (24) mindestens in Abhängigkeit der Außentemperatur, der Drehzahl des Motors (1), des Drucks der Einspritzrampe (5) und von Temperaturmessungen an einem Punkt oder an mehreren Punkten des Verteilerkreislaufs (4), des Sammelkreislaufs (6) und des Kühlwasserkreislaufs (2) des Motors (1) gesteuert werden.
